# EUROPÄISCHE PATENTSCHRIFT

(11) **EP 2 867 485 B1**
(45) Veröffentlichungstag und Bekanntmachung des Hinweises auf die Patenterteilung: **17.01.2018**
(21) Anmeldenummer: 13725075.9
(22) Anmeldetag: 22.05.2013
(51) Int. Cl.: F01N 3/20, G01L 19/06

(54) **SYSTEM ZUR ABGASNACHBEHANDLUNG BEI VERBRENNUNGSMOTOREN**
EXHAUST TREATMENT SYSTEM FOR COMBUSTION ENGINES
SYSTÈME DE TRAITEMENT D'ÉCHAPPEMENT POUR MOTEURS À COMBUSTION

(30) Priorität: 02.06.2012 DE 102012010979
(43) Veröffentlichungstag der Anmeldung: 06.05.2015
(73) Patentinhaber: Hydac Electronic GmbH, 66128 Saarbrücken (DE)
(72) Erfinder: GROH, Christian, 66453 Gersheim (DE); KATTLER, Frank, 66346 Püttlingen (DE)
(74) Vertreter: Bartels, Martin Erich Arthur
(86) Internationale Anmeldenummer: PCT/EP2013/001508
(87) Internationale Veröffentlichungsnummer: WO 2013/178336

(56) Entgegenhaltungen:
- EP-A1- 1 553 270
- WO-A1-01/57488
- WO-A1-01/88497
- WO-A1-03/027454
- DE-A1- 10 340 075
- DE-A1- 10 349 143
- DE-A1-102006 040 411
- US-A1- 2012 011 937

## Beschreibung

Die Erfindung betrifft ein System zur Abgasnachbehandlung bei einem Verbrennungsmotor mit den Merkmalen im Oberbegriff von Anspruch 1.

Derartige Systeme, die in der Fachsprache auch als Adblue-Systeme bezeichnet werden, können in der Fahrzeugtechnik eingesetzt werden, um im Abgasstrom enthaltene Stickoxyde zu Stickstoff zu reduzieren. Diesbezüglich wird so vorgegangen, dass eine wässrige Harnstofflösung über eine Zuführeinrichtung von einem Vorratstank dosiert dem Abgasstrom zugeführt wird, wobei aus dem Harnstoff durch Hydrolyse Ammoniak gewonnen wird. Dieses wirkt im Abgasstrom als selektives Reduktionsmittel. Um den Wirkungsgrad der Reduktion zu optimieren, wird die wässrige Harnstofflösung dem Abgasstrom mittels einer Pumpe oder einer sonstigen Zuführeinrichtung, die auch noch geschaltet sein kann, dosiert zugeführt, die mittels eines Steuergeräts lastabhängig und aufgrund von durch eine Sensoranordnung ermittelten Zustandsgrößen der Harnstofflösung gesteuert ist.

Der Wassergehalt der als zusätzlicher Betriebsstoff dienenden Harnstofflösung wirkt sich auf das Betriebsverhalten nachteilig aus. Das Gefrieren der wässrigen Lösung kann zum Ausfall des gesamten Systems führen, insbesondere durch Schädigung oder Zerstörung der Sensoranordnung und der mit ihr verbundenen Teile der Zuführeinrichtung. Diese Gefahr besteht insbesondere während Standzeiten bei Frosttemperaturen.

Die DE 103 49 143 A1 offenbart ein System zur Abgasnachbehandlung bei einem Verbrennungsmotor, aufweisend eine Zuführeinrichtung für die Zufuhr einer gefrierbaren Substanz, insbesondere in Form einer wässrigen Harnstofflösung, in einen Abgasstrom des Verbrennungsmotors und zumindest eine Sensoranordnung mit Sensoren, die auf die Substanz bezogene Zustandsgrößen, wie Druck und Temperatur, erkennen, wobei Teile der Sensoranordnung mit mindestens einem Fluidraum für die zumindest zeitweise Aufnahme der gefrierbaren Substanz zusammenwirken, wobei als Schutz gegen eine Schädigung des Systems durch Volumenausdehnung bei Gefrieren der Substanz eine Ausgleichseinrichtung auf den jeweiligen Fluidraum derart einwirkt, dass eine mit einer Zunahme des Fluiddrucks bei Gefrieren einhergehende Volumenausdehnung der Substanz innerhalb des zuordenbaren Fluidraumes kompensiert ist, wobei die Ausgleichseinrichtung zumindest ein nachgiebiges Element aufweist, das in dem die Sensoranordnung enthaltenden Bereich der Zuführleitung eine druckabhängige Vergrößerung des Volumens des Fluidraums ermöglicht, wobei der jeweilige Sensor an einem Abzweig der Zuführleitung angeordnet ist und wobei das nachgiebige Element eine druckabhängige Erweiterung der Zuführleitung am Abzweig ermöglicht.

Ein weiteres System zur Abgasnachbehandlung wurde in der US 2012/ 0011937 A1 offenbart. Die WO 01/88497 A1 und die DE 103 40 075 A1 offenbaren jeweils eine Ausgleichseinrichtung in einem Drucksensor. Bei der WO 03/027454 A1 ist die Ausgleichseinrichtung an einer Pumpe vorgesehen. Die DE 10 2006 040 411 A1 zeigt ein Reduktionsmitteldosiersystem auf, bei dem eine Ausgleichseinrichtung in einer Druckkammer mit einem Filterelement vorgesehen ist. In der WO 01/57488 A1 ist ein Drucksensor an einem Federelement gelagert. In der EP 1 553 270 A1 ist eine Ausgleichseinrichtung an einem aus einem Gehäuse führenden Kanal angeordnet.

Im Hinblick auf diese Problematik liegt der Erfindung die Aufgabe zugrunde, ein Adblue-System zur Verfügung zu stellen, bei dem die Gefahr einer Schädigung durch Frosteinflüsse minimiert ist.

Erfindungsgemäß ist diese Aufgabe durch ein System gelöst, das die Merkmale des Patentanspruchs 1 in seiner Gesamtheit aufweist.

Gemäß dem kennzeichnenden Teil des Anspruchs 1 besteht eine wesentliche Besonderheit der Erfindung darin, dass als nachgiebiges Element ein ein Wandteil am Abzweig der Zuführleitung bildendes Polster aus einem kompressiblen Werkstoff vorgesehen ist und dass das Polster am dem Sensor gegenüberliegenden Teil der Zuführleitung oder Ausgangsleitung vorgesehen ist.

Es ist ferner vorgesehen, dass als Schutz gegen eine Schädigung des Systems durch Volumenausdehnung bei Gefrieren der Substanz eine Ausgleichseinrichtung vorgesehen ist, die die mit einer Zunahme des Fluiddrucks bei Gefrieren einhergehende Volumenausdehnung kompensiert. Dadurch ist die Gefahr vermieden, dass es bei einem Gefrieren einer wässrigen Substanz, wie dies bei einer wässrigen Harnstofflösung unter Frostbedingungen der Fall ist, aufgrund der damit verbundenen Volumenvergrößerung zu einem Bersten von Wandungen oder insbesondere zu einer Schädigung oder Zerstörung empfindlicher Teile der zugehörigen Sensoranordnung kommen kann.

In besonders vorteilhafter Weise weist die Ausgleichseinrichtung zumindest ein nachgiebiges Element auf, das in dem die Sensoranordnung enthaltenden Bereich der Zuführleitung eine druckabhängige Vergrößerung des Volumens des Fluidraums ermöglicht, um dadurch die Volumenausdehnung bei Gefrieren schadlos zu kompensieren.

Die Anordnung ist so getroffen, dass das nachgiebige Element eine druckabhängige Erweiterung der Zuführleitung am Abzweig ermöglicht.

Mit besonderem Vorteil kann die Anordnung so getroffen sein, dass die Sensoranordnung mindestens einen mit dem Fluidraum der Zuführleitung in Verbindung stehenden Druck- und/oder Temperatursensor aufweist, wobei diese Sensoren vorzugsweise an dem zum Abgasstrom führenden Ausgangsteil der Zuführleitung angeordnet sind.

Ein derartiges Polster kann aus einem porösen, geschlossene Poren aufweisenden Werkstoff ausgebildet sein, vorzugsweise in Form eines aus Moosgummi gebildeten Polsters.

Nachstehend ist die Erfindung anhand von in der Zeichnung dargestellten Ausführungsbeispielen im Einzelnen erläutert. Es zeigen:
- Fig. 1: einen gegenüber einer praktischen Ausführungsform vergrößert und abgebrochen gezeichneten Längsschnitt lediglich des der Pumpe benachbarten Bereichs eines Ausführungsbeispiels des erfindungsgemäßen Systems;
- Fig. 2: einen abgebrochen, gegenüber Fig. 1 in kleinerem Maßstab sowie demgegenüber um 90° verdreht gezeichnetem Teilschnitt des der Pumpe benachbarten Bereichs, wobei eine zugeordnete Filtervorrichtung in unvollständiger Darstellung lediglich angedeutet ist;
- Fig. 3: eine der Fig. 2 entsprechende Darstellung eines abgewandelten Ausführungsbeispiels;
- Fig. 4: einen schematisch vereinfacht gezeichneten Längsschnitt lediglich der Filtervorrichtung für die Ausführungsbeispiele des erfindungsgemäßen Systems; und
- Fig. 5: einen vergrößert, schematisch vereinfacht und abgebrochen gezeichneten Teilschnitt lediglich des einem Endbereich der Filtervorrichtung benachbarten und Sensoren aufweisenden Bereichs eines weiteren Ausführungsbeispiels des erfindungsgemäßen Systems.

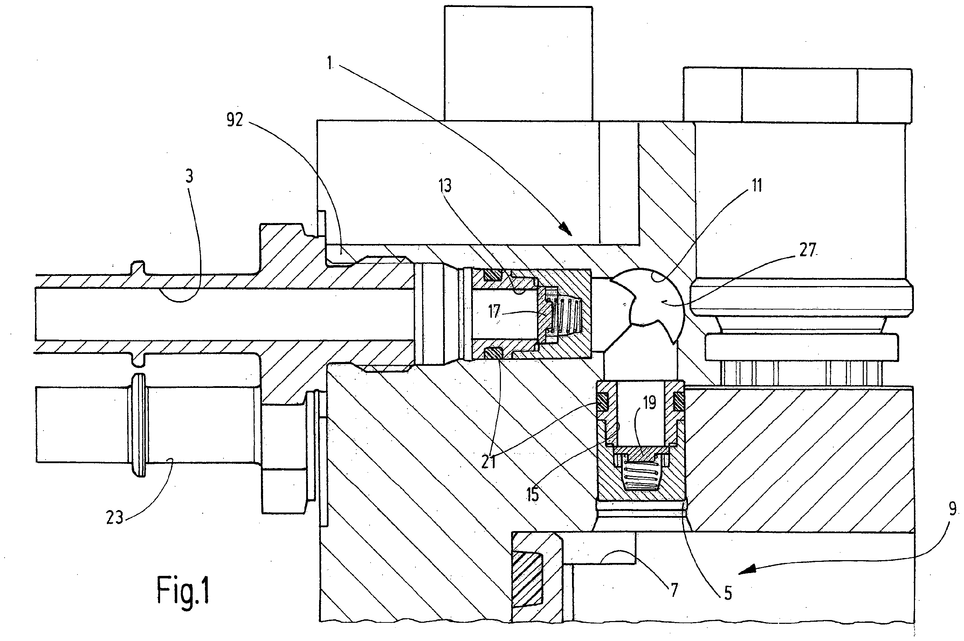

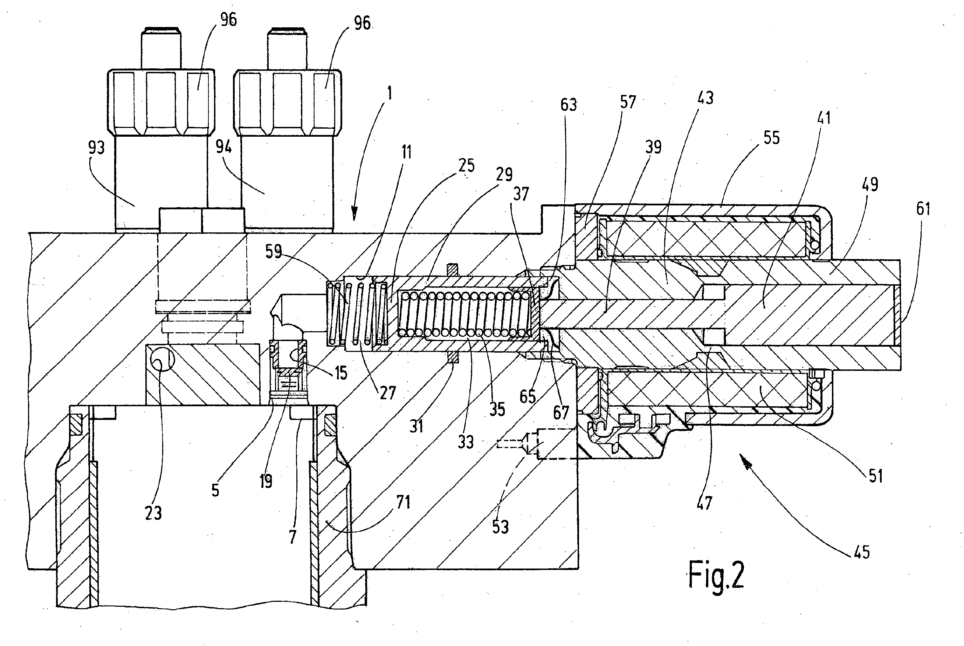

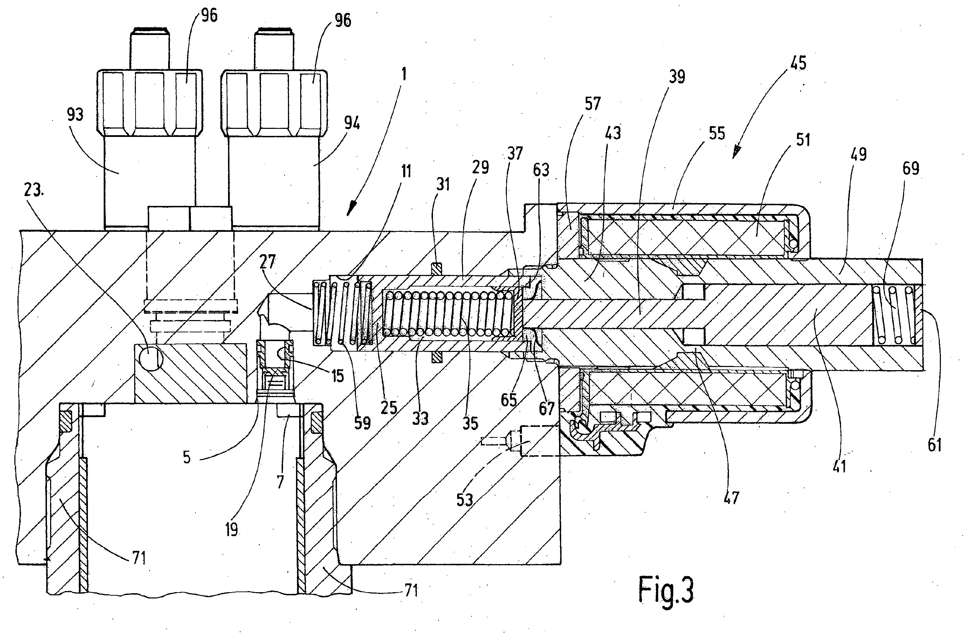

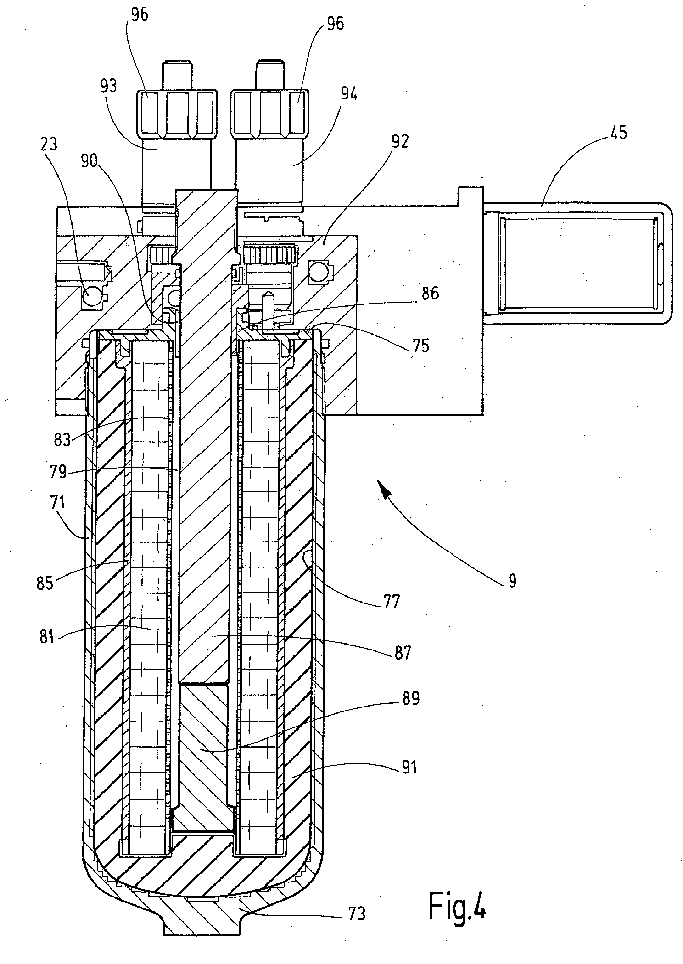

Von einem Ausführungsbeispiel des erfindungsgemäßen Systems zeigt die Fig. 1 eine Pumpe 1 als Bestandteil einer Zuführeinrichtung, die von einem nicht gezeigten Vorratstank, der einen Vorrat einer wässrigen Harnstofflösung enthält, über die Pumpe 1 zu einer am besten in Fig. 4 gezeigten Filtervorrichtung und von dieser zu einer (ebenfalls nicht gezeigten) Einspritzdüse führt, die eine dosierte Menge der Harnstofflösung in den Abgasstrahl sprüht. Hierfür kann auch eine zusätzliche Zuführ- oder Pumpeneinrichtung vorgesehen sein, welche die Druckerhöhung auf den endgültigen Einspritzdruck ermöglicht. Die Harnstofflösung gelangt über eine Eingangsleitung 3 zur Pumpe 1, die eine dosierte Menge der Harnstofflösung vom Pumpenausgang 5 zum Filtereinlass 7 der Filtervorrichtung 9 fördert, die in Fig. 4 näher dargestellt ist. Wie den Fig. 2 und 3 entnehmbar ist, ist die Pumpe 1 als Kolbenpumpe ausgebildet, deren Zylinder 11 in Fig. 2 und 3 sichtbar ist, die gegenüber der Zeichnungsebene von Fig. 1 um 90° versetzt sind. Wie Fig. 1 zeigt, befinden sich an der Eingangsleitung 3 und am Ausgang 5 der Pumpe 1 jeweils ein Rückschlagventil 13 bzw. 15 mit federbelasteten Schließkörpern 17 bzw. 19, wobei das Rückschlagventil 13 beim Ansaugen der Pumpe 1 öffnet und das Rückschlagventil 15 beim Förderhub der Pumpe 1 öffnet. Dichtringe 21 bilden die Abdichtung an den Rückschlagventilen 13, 15. Die die Filtervorrichtung 9 verlassende Harnstofflösung gelangt über eine Ausgangsleitung 23 zum Abgasstrom.

Wie bereits erwähnt, ist die Pumpe 1 eine Kolbenpumpe. Der im Zylinder 11 geführte Pumpenkolben 25 ist an seinem vom Fluidraum 27 der Pumpe 1 abgewandten Ende durch ein Hülsenteil 29 verlängert, mit dem der Kolben 25 an der Wand des Zylinders 11 axial bewegbar geführt ist, wobei zur Abdichtung eine Kolbendichtung 31 vorgesehen ist. Der Innenraum 33 des Hülsenteils 29 ist an dem dem Fluidraum 27 entgegengesetzten Ende offen. Vom offenen Ende her ist in den Innenraum 33 eine Druckfeder 35 eingesetzt. Diese stützt sich einerseits am geschlossenen Boden des Hülsenteils 29 und andererseits an einem Druckstück 37 ab, das am offenen Ende des Hülsenteils 29 in diesem verschiebbar ist. Mit der freien Seite des Druckstücks 37 wirkt ein Betätigungsteil 39 zusammen, das durch einen Fortsatz eines Magnetkolbens 41 gebildet ist. Dieses Betätigungsteil 39 ist in einem Polkörper 43 einer Elektromagneteinrichtung 45 verschiebbar geführt. Über eine Verjüngungsstelle 47 verringerten Materialquerschnitts, die eine magnetische Trennstelle bildet, geht der Polkörper 43 in ein Polrohr 49 über, in dem der mit dem Betätigungsteil 39 verbundene Magnetkolben 41 bewegbar ist. Die Magnetwicklung 51, die über eine Anschlusseinrichtung 53 bestrombar ist, befindet sich in einem ferromagnetischen Magnetgehäuse 55 mit einer Polplatte 57. Die Elektromagneteinrichtung 45 ist als sog. "drückender" Magnet ausgebildet, wobei der Magnetkolben 41 bei Bestromung der Magnetwicklung 51 das Betätigungsteil 39 gegen das Druckstück 37 und damit die Druckfeder 35 drückt. Dadurch wird über die Druckfeder 35 der Pumpenkolben 25 in der Zeichnung nach links für einen Förderhub bewegt, bei dem eine Dosismenge der Harnstofflösung aus dem Fluidraum 27 über das Rückschlagventil 15 am Pumpenausgang 5 abgegeben wird. Die Fig. 2 und 3 zeigen jeweils den unbestromten Zustand der Elektromagneteinrichtung 45. Durch Bestromen der Wicklung 51 bewegt das Betätigungsteil 39 den Kolben 25 für einen Förderhub in der Zeichnung nach links gegen die Kraft einer Rückstellfeder 59, die sich im Fluidraum 27 befindet und den Pumpenkolben 25 bei Beendigung der Bestromung der Wicklung 51 in die in Fig. 2 und 3 gezeigte Ausgangsstellung nach rechts zurück bewegt. Bei dem Ausführungsbeispiel von Fig. 2 liegt das freie Ende des Magnetkolbens 41 hierbei an einem Endanschlag an, der durch ein Abschlussstück 61 am Ende des Polrohres 49 gebildet ist.

Auch wenn sich der Magnetkolben 41 in einer Endposition befindet, wie es in Fig. 2 gezeigt ist, wo eine weitere Bewegung des Betätigungsteils 39 in eine Richtung blockiert ist, die der Vergrößerung des Volumens des Fluidraums 27 entspricht, ist eine Hubbewegung des Pumpenkolbens 25 möglich, weil die Druckfeder 35 ein nachgiebiges Bauteil darstellt, das bei einem übermäßigen Druckanstieg im Fluidraum 27 zusammendrückbar ist, so dass der Pumpenkolben 25 eine das Volumen des Fluidraums 27 vergrößernde Bewegung in der Zeichnung nach rechts ausführen kann, wobei sich das Ende 63 des Hülsenteils 29 in einen Freiraum 65 am Polkörper 43 bewegt. Dank der so gebildeten Nachgiebigkeit kann so die bei einem Gefrieren der Harnstofflösung im Fluidraum 27 auftretende Volumenvergrößerung schadlos kompensiert werden. Im Freiraum 65 befindet sich eine Membrandichtung 67 als zusätzliches Dichtelement.

Die Fig. 3 zeigt eine Variante, bei der anstelle des durch das Endstück 61 gebildeten festen Endanschlags des Magnetkolbens 41 eine Zusatzfeder 69 vorgesehen ist, die das Betätigungsteil 39 des Magnetkolbens 41 stets kraftschlüssig in Anlage am Druckstück 37 der Druckfeder 35 hält, jedoch eine geringere Federwirkung als die Rückstellfeder 59 besitzt.

Die Fig. 4 zeigt nähere Einzelheiten der Filtervorrichtung 9 mit einem Filtergehäuse 71 in Form eines kreiszylindrischen Topfes mit geschlossenem Boden 73. Das Gehäuse 71 ist am offenen Ende durch eine Endkappe 75 eines im Gehäuse 71 aufgenommenen Filterelements 77 geschlossen. Das Filterelement 77 weist ein einen hohlzylindrischen inneren Filterhohlraum 79 umgebendes Filtermedium 81 auf, dessen Innenseite an einem Stützrohr 83 anliegt und außenseitig von einem Stützkörper 85 umgeben ist. Dieser begrenzt innerhalb des Filtergehäuses 71 ein Teilvolumen, das den mit dem inneren Filterhohlraum 79 in Fluidverbindung stehenden Fluidraum als Teilvolumen des Gehäuses 71 begrenzt. Eingang (Filtereinlass 7 von Fig. 2 und 3) und Ausgang 90 des Fluidraums des Filtergehäuses 71 befinden sich an der Endkappe 75 des Filterelements 77. Durch eine zentrale Öffnung 86 der Endkappe 75 erstreckt sich ein elektrischer Heizstab 87 in den inneren Filterhohlraum 79. Für eine thermische Kopplung mit dem Heizstab 87 schließt sich an dessen Ende ein metallisches Füllstück 89 an.

Um bei einem Gefrieren der wässrigen Harnstofflösung in dem den Fluidraum bildenden Teilvolumen des Filtergehäuses 71 eine Vergrößerung des Teilvolumens relativ zum Restvolumen im Filtergehäuse 71 zu ermöglichen, ist als nachgiebiges Element zwischen der Innenwand des Gehäuses 71 und der Außenseite des Filterelements 77 eine Ummantelung 91 aus einem Werkstoff vorgegebener Kompressibilität vorgesehen. Beim vorliegenden Ausführungsbeispiel ist hierfür eine Ummantelung 91 aus Moosgummi vorgesehen, die beim gezeigten Beispiel, von der Endkappe 75 ausgehend, das Filterelement 77 vollständig ummantelt. Die Ummantelung 91 füllt somit das gesamte, innerhalb des Filtergehäuses 71 befindliche Restvolumen aus, das sich durch Zusammendrücken der Ummantelung 91 relativ zu dem den Fluidraum bildenden Teilvolumen verringert, um eine schadlose Vergrößerung des durch den Fluidraum gebildeten Teilvolumens zu ermöglichen, wenn die Harnstofflösung im Fluidraum gefriert.

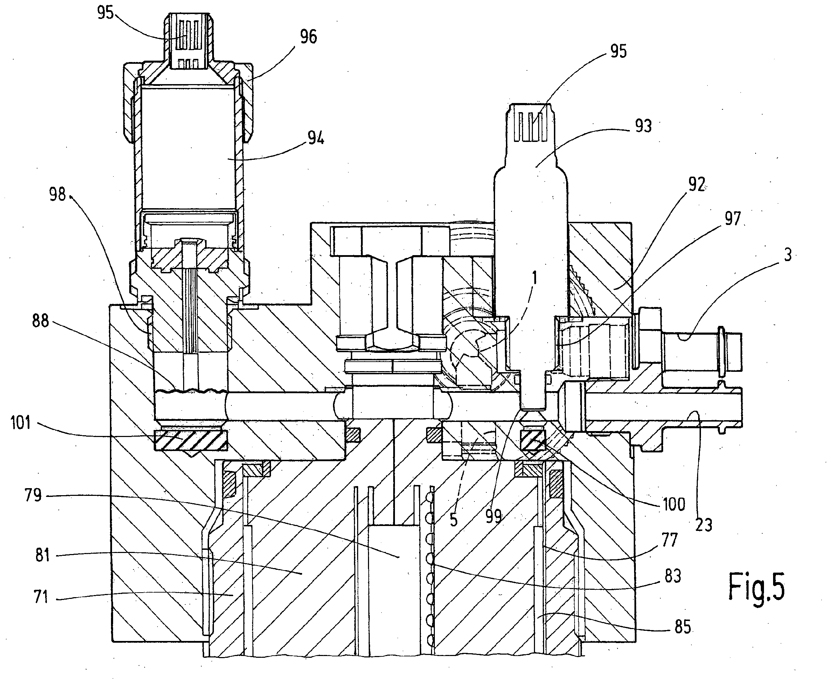

Die Fig. 5 zeigt von einem Ausführungsbeispiel des erfindungsgemäßen Systems den Anschlussteil 92 mit der zur Pumpe 1 führenden Eingangsleitung 3 und der Ausgangsleitung 23 für die dosierte Abgabe der Harnstofflösung. An der Ausgangsleitung 23 sind ein Temperatursensor 93 und ein Drucksensor 94 angeschlossen. An der elektrischen Steckverbindung 95 der Sensoren 93, 94 sind in Fig. 2 bis 4 jeweils Steckerkappen 96 eingezeichnet, während in Fig. 5 lediglich am Drucksensor 94 eine Steckerkappe 96 dargestellt ist. Beide Sensoren 93, 94 sind als Einschraubsensoren mittels Einschraubgewinden 97 bzw. 98 in den Anschlussteil 92 eingeschraubt. Dabei erstreckt sich der Messfühler 99 des Temperatursensors 93 in die Ausgangsleitung 23. Seitens des Drucksensors 94 ist ein Druck übertragendes Element, beispielsweise in Form einer Membran 88, in Fluidverbindung mit der Ausgangsleitung 23. Ferner können hier auch Drucksensoren mit sogenannter frontbündiger Membran eingesetzt werden, die Bestandteil des jeweiligen Drucksensors sind.

Jedem Sensor 93 und 94 ist als Gefrierschutz ein nachgiebiges Bauelement zugeordnet, das am Fluidbereich des jeweiligen Sensors 93, 94 ein nachgiebiges Wandteil bildet. Beim Temperatursensor 93 ist hierfür an dem dem Messfühler 99 gegenüberliegenden Teil der Ausgangsleitung 23 ein nachgiebiges Polster 100 vorgesehen, das beim vorliegenden Beispiel aus einem Würfel aus Moosgummi gebildet ist. Seitens des Drucksensors 94 ist ein an entsprechender Stelle der Ausgangsleitung 23 angeordnetes Polster 101 in Form einer Platte angeordnet, die ebenfalls aus Moosgummi gebildet ist und ebenfalls ein nachgiebiges Wandteil der Ausgangsleitung 23 am Eingangsbereich des Sensors 94 bildet. Durch diese Nachgiebigkeit ist die Volumenvergrößerung jeweils kompensierbar, die sich bei einem Gefrieren der wässrigen Harnstofflösung in der Ausgangsleitung 23 ergibt, so dass eine Beschädigung der Anschlussbereiche der Sensoren 93, 94, wie Messfühler 99 und Einschraubgewinde 97, 98 vermieden ist.

## Patentansprüche

1. System zur Abgasnachbehandlung bei einem Verbrennungsmotor, aufweisend eine Zuführeinrichtung (23) für die Zufuhr oder Ausgangsleitung (23) für die Abfuhr einer gefrierbaren Substanz, insbesondere in Form einer wässrigen Harnstofflösung, in einen Abgasstrom des Verbrennungsmotors und zumindest eine Sensoranordnung mit Sensoren (93, 94), die auf die Substanz bezogene Zustandsgrößen, wie Druck und Temperatur, erkennen, wobei Teile der Sensoranordnung mit mindestens einem Fluidraum (27) für die zumindest zeitweise Aufnahme der gefrierbaren Substanz zusammenwirken, wobei als Schutz gegen eine Schädigung des Systems durch Volumenausdehnung bei Gefrieren der Substanz eine Ausgleichseinrichtung (100, 101) auf den jeweiligen Fluidraum (27) derart einwirkt, dass eine mit einer Zunahme des Fluiddrucks bei Gefrieren einhergehende Volumenausdehnung der Substanz innerhalb des zuordenbaren Fluidraumes kompensiert ist, wobei die Ausgleichseinrichtung zumindest ein nachgiebiges Element (100, 101) aufweist, das in dem die Sensoranordnung (93, 94) enthaltenden Bereich der Zuführleitung (23) oder Ausgangsleitung (23) eine druckabhängige Vergrößerung des Volumens des Fluidraums ermöglicht, wobei der jeweilige Sensor (93, 94) an einem Abzweig der Zuführleitung (23) oder Ausgangsleitung (23) angeordnet ist und wobei das nachgiebige Element (100, 101) eine druckabhängige Erweiterung der Zuführleitung (23) am Abzweig ermöglicht, **dadurch gekennzeichnet, dass** als nachgiebiges Element ein ein Wandteil am Abzweig der Zuführleitung (23) bildendes Polster (100, 101) aus einem kompressiblen Werkstoff vorgesehen ist und dass das Polster (100, 101) am dem Sensor (93, 94) gegenüberliegenden Teil der Zuführleitung (23) oder Ausgangsleitung (23) vorgesehen ist.

2. System nach Anspruch 1 oder 2, **dadurch gekennzeichnet, dass** die Sensoranordnung mindestens einen mit dem Fluidraum der Zuführleitung (23) in Verbindung stehenden Druck- und/oder Temperatursensor (93, 94) aufweist.

3. System nach einem der vorstehenden Ansprüche, **dadurch gekennzeichnet, dass** die Sensoranordnung (93, 94) an dem zum Abgasstrom führenden Ausgangsteil (23) der Zuführleitung angeordnet ist.

4. System nach einem der vorstehenden Ansprüche, **dadurch gekennzeichnet, dass** das jeweilige Polster (100, 101) aus einem porösen, geschlossene Poren aufweisenden Werkstoff gebildet ist.

5. System nach einem der vorstehenden Ansprüche, **dadurch gekennzeichnet, dass** jeweilige Polster (100, 101) aus Moosgummi vorgesehen sind.

6. System nach einem der vorstehenden Ansprüche, **dadurch gekennzeichnet, dass** zumindest eine Pumpe (1) für eine dosierte Zufuhr der gefrierbaren Substanz vorgesehen ist, dass Teile der Pumpe (1) mit mindestens einem Fluidraum (27) für die zumindest teilweise Aufnahme der gefrierbaren Substanz zusammenwirken und dass die Ausgleichseinrichtung (25) auf den Fluidraum (27) derart einwirkt, dass eine mit einer Zunahme des Fluiddrucks bei Gefrieren einhergehende Volumenvergrößerung kompensiert ist.

7. System nach einem der vorstehenden Ansprüche, **dadurch gekennzeichnet, dass** die Zuführeinrichtung (23) zumindest eine Filtervorrichtung (9) mit einem Filter zur Filtration der gefrierbaren Substanz aufweist.

8. System nach einem der vorstehenden Ansprüche, **dadurch gekennzeichnet, dass** die Ausgleichseinrichtung im Gehäuse (71) der Filtervorrichtung (9) zumindest ein nachgiebiges Element (91) aufweist, das eine druckabhängige Vergrößerung des mit der Filtervorrichtung (9) zusammenwirkenden Fluidraums (79) ermöglicht.

## Claims

1. A system for exhaust gas aftertreatment in an internal combustion engine, having a feed device (23) for delivering or an output line (23) for discharging a freezable substance, in particular in the form of an aqueous urea solution, into an exhaust gas flow of the internal combustion engine and at least one sensor arrangement with sensors (93, 94) which detect state variables which relate to the substance, such as pressure and temperature, parts of the sensor arrangement interacting with at least one fluid chamber (27) for at least periodically receiving the freezable substance, as protection against damage to the system by volumetric expansion in the event of the substance freezing, a compensating device (100, 101) acting on the respective fluid chamber (27) such that a volumetric expansion of the substance associated with an increase in the fluid pressure in the event of freezing is compensated for within the assignable fluid chamber, the compensating device having at least one flexible element (100, 101) which enables a pressure-dependent increase of the volume of the fluid chamber in the region of the feed line (23) or output line (23) containing the sensor arrangement (93, 94), the respective sensor (93, 94) being disposed on a branch of the feed line (23) or output line (23), and the flexible element (100, 101) enabling pressure-dependent expansion of the feed line (23) on the branch, **characterised in that** a cushion (100, 101) made of a compressible material that forms a wall part on the branch of the feed line (23) is provided as a flexible element, and that the cushion (100, 101) on the part of the feed line (23) or output line (23) lying opposite the sensor (93, 94) is provided.

2. The system according to Claim 1 or 2, **characterised in that** the sensor arrangement has at least one pressure and/or temperature sensor (93, 94) connected to the fluid chamber of the feed line (23).

3. The system according to any of the preceding claims, **characterised in that** the sensor arrangement (93, 94) is disposed on the output part (23) of the feed line leading to the flow of exhaust gas.

4. The system according to any of the preceding claims, **characterised in that** the respective cushion (100, 101) is formed from a material that has porous, closed pores.

5. The system according to any of the preceding claims, **characterised in that** respective cushions (100, 101) made of foam rubber are provided.

6. The system according to any of the preceding claims, **characterised in that** at least one pump (1) is provided for a metered supply of the freezable substance, that parts of the pump (1) interact with at least one fluid chamber (27) for at least partially receiving the freezable substance, and that the compensating device (25) acts on the fluid chamber (27) such that an increase in volume associated with an increase in fluid pressure upon freezing is compensated for.

7. The system according to any of the preceding claims, **characterised in that** the feed device (23) has at least one filter device (9) with a filter for filtering the freezable substance.

8. The system according to any of the preceding claims, **characterised in that** the compensating device in the housing (71) of the filter device (9) has at least one flexible element (91) which enables a pressure-dependent increase of the fluid chamber (79) interacting with the filter device (9).

## Revendications

1. Système de post-traitement de gaz d'échappement pour un moteur à combustion interne, comportant un dispositif (23) d'apport pour l'apport ou un conduit (23) de sortie pour l'évacuation d'une substance congelable, notamment sous la forme d'une solution aqueuse d'urée, dans un courant de gaz d'échappement du moteur à combustion interne et au moins un agencement de capteur ayant des capteurs (93, 94), qui détectent des grandeurs d'état se rapportant à la substance, comme la pression et la température, des parties de l'agencement de capteur coopérant avec au moins un espace (27) pour du fluide, de réception au moins de temps en temps de la substance congelable, dans lequel, lors de la congélation de la substance, un dispositif (100, 101) e compensation agit sur l'espace (27) pour du fluide, de manière à compenser, à l'intérieur de l'espace pour du fluide pouvant être associé, une augmentation du volume de la substance, inhérente à une élévation de la pression du fluide à la congélation, le dispositif de compensation ayant au moins un élément (100, 101) pouvant céder élastiquement, qui rend possible, dans la partie, comportant l'agencement (93, 94) de capteur, du conduit (23) d'apport ou du conduit (23) de sortie, un agrandissement du volume de l'espace pour du fluide en fonction de la pression, le capteur (93, 94) respectif étant monté sur un embranchement du conduit (23) d'apport ou du conduit (23) de sortie et l'élément (100, 101) cédant élastiquement rendant possible, à l'embranchement, un élargissement du conduit (23) d'apport en fonction de la pression, **caractérisé en ce qu'**il est prévu, comme élément cédant élastiquement, un coussin (100, 101) en un matériau compressible formant une partie de paroi à l'embranchement du conduit (23) d'apport et **en ce que** le coussin (100, 101) est prévu sur la partie, opposée au capteur (93, 94), du conduit (23) d'apport ou du conduit (23) de sortie.

2. Système suivant la revendication 1 ou 2, **caractérisé en ce que** l'agencement de capteur a au moins un capteur (93, 94) de pression et/ou de température en liaison avec l'espace pour du fluide du conduit (23) d'apport.

3. Système suivant l'une des revendications précédentes, **caractérisé en ce que** l'agencement (93, 94) de capteur est monté sur la partie (23) de sortie, dans lequel passe le courant de gaz d'échappement, du conduit d'apport.

4. Système suivant l'une des revendications précédentes, **caractérisé en ce que** le coussin (100, 101) est en un matériau poreux à pores fermés.

5. Système suivant l'une des revendications précédentes, **caractérisé en ce que** des coussins (100, 101) sont en caoutchouc mousse.

6. Système suivant l'une des revendications précédentes, **caractérisé en ce qu'**il est prévu au moins une pompe (1) pour un apport dosé de la substance congelable, **en ce que** des parties (1) de la pompe coopèrent avec au moins un espace (27) pour du fluide, en vue de recevoir, au moins de temps en temps, la substance congelable et **en ce que** le dispositif (25) de compensation agit sur l'espace (27) pour du fluide, de manière à compenser un agrandissement du volume inhérent à une élévation de la pression du fluide à la congélation.

7. Système suivant l'une des revendications précédentes, **caractérisé en ce que** le dispositif (23) d'apport a au moins un dispositif (9) de filtration ayant un filtre de filtration de la substance congelable.

8. Système suivant l'une des revendications précédentes, **caractérisé en ce que** le dispositif de compensation a, dans l'enveloppe (71) du dispositif (9) de filtration, au moins un élément (91) cédant élastiquement, qui rend possible un agrandissement en fonction de la pression de l'espace (79) pour du fluide coopérant avec le dispositif (9) de filtration.
